# EUROPEAN PATENT APPLICATION

(11) **EP 2 667 580 A1**
(43) Date of publication of application: **27.11.2013**
(21) Application number: 12250114.1
(22) Date of filing: 24.05.2012
(51) Int. Cl.: H04M 3/42, H04M 3/487

(54) **System and method for providing a ring back tone service**

(71) Applicant: Muzicall Limited, London W1W 7QA (GB)
(72) Inventor: Rustam, Aliyev, London W2 5TQ (GB)
(74) Representative: Sayer, Robert David

(57) **Abstract**

A system for providing a Ring Back Tone (RBT) service is disclosed. It comprises, in an intelligent switched telecommunications network 190, a first node 120 configured to receive from user equipment 100 a call request string of digits and to recognise therein one or more auxiliary digits suffixed to a telephone number and a second node 140 configured to receive the auxiliary digits from the first node, to identify therefrom a RBT service, and to instruct the first node to connect to a RBT node 150 associated with the RBT service. The RBT node 150 is configured to receive a connection from the first node, including the auxiliary digits, and responsive thereto to play a RBT corresponding to the auxiliary digits to the user equipment.

## Description

### Field of the Invention

This invention relates to a system and method for providing a ring back tone (RBT) service.

### Background of the Invention

In a telephone network, whether a wired Public Switched Telephone Network (PSTN), a mobile telephone network or an Internet Protocol (IP) telephone network, when a caller calls another party to establish a voice connection, the network transmits to the caller a RBT until either the called party answers, the caller is re-directed to voicemail or the caller hangs up. Until relatively recently, the RBT transmitted by the network was always a uniform one, e.g. "ring ring". In recent times, however, some networks have offered personalised RBTs whereby subscribers specify to a service provider one or more audio clips, or even video clips, that play either when the user dials a telephone number or to a caller when the caller dials the user's telephone number.

Information concerning the personalised RBT is stored in a local subscriber database for access by the telephone network. In order to use the service, users first have to subscribe to a provider's RBT service in order that their telephone number can be associated with a RBT and so that the network can access and transmit the RBT when said telephone number calls out or is called. Subscribers wishing to change, turn on or turn off the RBT need to access the service provider's system in order to effect such control. This may be sufficient for entertainment or corporate branding purposes, but for other situations such as in advertising, this conventional system can be limiting. In particular, there is no facility to allow RBTs to be set on-demand without the need to subscribe first

### Summary of the Invention

According to a **first aspect,** there is provided a system for providing a Ring Back Tone (RBT) service, comprising: means for receiving a call request from a calling party which call request includes a string of digits; means for identifying from said string a first part comprising digits for identifying a called party to a telephone network and a second part suffixed or subsequent to the first part comprising one or more auxiliary digits; and means responsive to identifying the presence of the auxiliary digits to access or cause access to a RBT database which corresponds said auxiliary digits to a RBT for transmission to the caller.

The system, by virtue of being able to recognise the presence (or absence) of suffixed digits, is therefore able to determine whether, and if so, what personalised RBT is to be played to the caller on an on demand basis.

This provides the additional benefit that it does not require for either the called or calling party to have previously subscribed to an RBT service to be played a customised RBT.

Further, multiple different RBTs can be associated with a single number.

Further, the system does not require a business or individual to change their telephone number, because when the telephone number is dialled without a suffix, it will still be routed through.

Further, the system does not require a change in the numbering plan used by fixed or mobile operators.

Further, consumers will not be confused if a suffix is appended to a type of number format that they readily recognize or are used to.

Further, in relation to mobile and internet telephone systems, within business and other contact directories the suffix can be hidden and only be activated through 'click to call' where the suffix is added to the dialer program within the Operating System of a Mobile Phone or Web -based VOIP application.

Further, the application of a suffix provides additional benefits by way of reducing the complexity of integration with a mobile or fixed line operator. The suffix indentifying means does not require any integration with the operator's Home Location Register (HLR), billing or RBT player. It is therefore decoupled from the carrier's provisioning systems which might otherwise cause problems if a consumer wishes to change their RBT.

The identifying means may be configured to identify the first and second parts by means of identifying a separation digit or symbol between the two parts in the call request. The identifying means may be configured to identify a separation symbol which is either the "*" or "#" symbol.

The identifying means may comprise a telephone network switch, for example a Switched Service Point (SSP) of the network.

The means responsive to identifying the presence of auxiliary digits may comprise a network service control point (SCP) configured to receive at least the auxiliary digits from the telephone network switch, to identify whether the auxiliary digits correspond to a RBT service by means of comparing said digits with a stored list and, in such case, to access or cause access to the RBT database by means of the or a different network switch.

The system may further comprise RBT transmission means associated with the RBT database for receiving the first part of the call request identifying the calling party and to transmit the corresponding RBT to the calling party.

The system may further comprise a network switch configured to set up a first call with the RBT transmission means to enable transmission of the corresponding RBT to the calling party via said switch, and in parallel to set up a second call to the identified called party and to subsequently drop the connection with the RBT transmission means in the event that the called party answers the call.

The system may further comprise a network switch configured to set up a first call with the RBT transmission means to cause transmission of the corresponding RBT to the calling party, and to transmit the identity of the called party to the RBT transmission means, the RBT transmission means being further configured to set up a second call between it and the identified called party and in the event that the called party answers the call, to stop transmission of the RBT and establish a bridged connection between the called party and the calling party.

In a second aspect, there is provided a system for providing a Ring Back Tone (RBT) service, comprising, in an intelligent switched telecommunications network: a first node configured to receive from user equipment a call request string of digits and to recognise therein one or more auxiliary digits suffixed to a telephone number; a second node configured to receive the auxiliary digits from the first node, to identify therefrom a RBT service, and to instruct the first node to connect to a RBT node associated with the RBT service; and a RBT node configured to receive a connection from the first node, including the auxiliary digits, and responsive thereto to play a RBT corresponding to the auxiliary digits to the user equipment.

In a third aspect, there is provided a RBT transmission means or node configured for use with systems described above.

In a fourth aspect, there is provided a RBT management system for use with a system as defined above, comprising: means for assigning to a user a string of auxiliary digits; means for receiving RBT content from the user; and means for transferring the RBT content to the RBT transmission means or node for being stored in correspondence with the auxiliary digits assigned to the user.

The RBT management system may further comprise means for receiving from the RBT transmission means or node, for each instance of a RBT being played to a caller, one or more of the caller identity, called party identity, auxiliary digits, the call start time, the call duration, and the call termination reason.

In a fifth aspect, there is provided a method for providing a Ring Back Tone (RBT) service, comprising: receiving a call request from a calling party which call request includes a string of digits; identifying from said string a first part comprising digits for identifying a called party to a telephone network and a second part suffixed or subsequent to the first part comprising one or more auxiliary digits; and responsive to identifying the presence of the auxiliary digits to access or cause access to a RBT database which corresponds said auxiliary digits to a RBT for transmission to the caller.

The identifying step may identify the first and second parts by means of identifying a separation digit or symbol between the two parts in the call request. The identifying step may identify a separation symbol which is either the "*" or "#" symbol.

The identifying step may be performed at a telephone network switch, for example the SSP of the network.

The step responsive to identifying the presence of auxiliary digits can be performed at a network service control point which receives at least the auxiliary digits from the telephone network switch, identifies whether the auxiliary digits correspond to a RBT service by means of comparing said digits with a stored list and, in such case, accesses or causes access to the RBT database by means of the or a different network switch.

The method may further comprise receiving the first part of the call request identifying the calling party and transmitting the corresponding RBT to the calling party.

The method may further comprise setting up a first call with the RBT transmission means to enable transmission of the corresponding RBT to the calling party via said switch, and in parallel setting up a second call to the identified called party and subsequently dropping the connection with the RBT transmission means in the event that the called party answers the call.

The method may further comprise setting up a first call with the RBT transmission means to cause transmission of the corresponding RBT to the calling party, transmitting the identity of the called party to the RBT transmission means, causing the RBT transmission means to up a second call between it and the identified called party, wherein in the event that the called party answers the call, transmission of the RBT is stopped and a bridged connection is established between the called party and the calling party.

A sixth aspect of the invention provides a method for providing a Ring Back Tone (RBT) service, comprising, in an intelligent switched telecommunications network: at a first node, receiving from user equipment a call request string of digits and recognising therein one or more auxiliary digits suffixed to a telephone number; at a second node, receiving the auxiliary digits from the first node, identifying therefrom a RBT service, and instructing the first node to connect to a RBT node associated with the RBT service; and at a RBT node, receiving a connection from the first node, including the auxiliary digits, and responsive thereto playing a RBT corresponding to the auxiliary digits to the user equipment.

A seventh aspect of the invention provides a method of providing RBT management for use with a system described above, comprising: assigning to a user a string of auxiliary digits; receiving RBT content from the user; and transferring the RBT content to the RBT transmission means or node for being stored in correspondence with the auxiliary digits assigned to the user.

The method may further comprise receiving from the RBT transmission means or node, for each instance of a RBT being played to a caller, one or more of the caller identity, called party identity, auxiliary digits, the call start time, the call duration, and the call termination reason.

An eighth aspect of the invention computer program comprising instructions that when executed by computer apparatus control it to perform the method as defined above.

An ninth aspect of the invention provides a non-transitory computer-readable storage medium having stored thereon computer-readable code, which, when executed by computing apparatus, causes the computing apparatus to perform a method comprising: receiving a call request from a calling party which call request includes a string of digits; identifying from said string a first part comprising digits for identifying a called party to a telephone network and a second part suffixed or subsequent to the first part comprising one or more auxiliary digits; and responsive to identifying the presence of the auxiliary digits to access or cause access to a RBT database which corresponds said auxiliary digits to a RBT for transmission to the caller.

### Brief Description of the Drawings

Embodiments of the invention will now be described, by way of non-limiting example, with reference to the accompanying drawings in which:
Figure 1 is a schematic diagram showing components of an intelligent switched telecommunications network according to the invention and associated components including a RBT management system, a PSTN and end user terminals;
Figure 2 is a timing diagram showing call flow stages employed by the Figure 1 components in a first example;
Figure 3 is a timing diagram showing call flow stages employed by the Figure 1 components in a second example; and
Figure 4 is a schematic diagram showing components of an advertising RBT service which uses the intelligent network shown in Figure 1;

### Detailed Description of Preferred Embodiments

As already described, RBT systems are used to play audio sounds or video clips during call set up between a calling party and a called party, before the called party answers.

Embodiments to be described below detail the technology to allow on-demand RBT usage without the need for subscription.

In particular, the embodiments provide an intelligent network configured so as to recognise suffix codes appended after dialled directory numbers. Such suffix codes provide the calling party with the ability to invoke a RBT service on demand because the network is configured to distinguish between the called party identity (the directory number) and the suffix and thereby recognise that a personalised RBT is to be transmitted rather than the ITU one.

Additionally, individuals or advertisers have the ability to determine what callers to their directory number hear in place of the ITU RBT by publishing the appended suffix. Publishers of telephone numbers, be they web, mobile application or print -based, may manage such a service by publishing suffixes to their customers telephone numbers and receiving, through data feedback, information indicative of what numbers were dialled, what RBTs were played, for how long, and so on to derive a useful source of marketing information.

Generally speaking, the method involves an intelligent telephone network receiving a dialled number, receiving a suffix appended to the dialled number, querying a centralized database and triggering a RBT associated with the suffix for playback to the caller. This method eliminates the need of either the calling party or called party to subscribe to the RBT service. A related method includes the actions of appending a suffix to advertised numbers, selecting and playing a RBT advertisement based on one or a combination of calling number, called number and dialled suffix.

The RBT can be audio, video or both. The system and method can operate in a wireless, wireline or converged network such as mobile, landline PSTN or VOIP, although the example of a mobile intelligent switched telecommunications network is used herein.

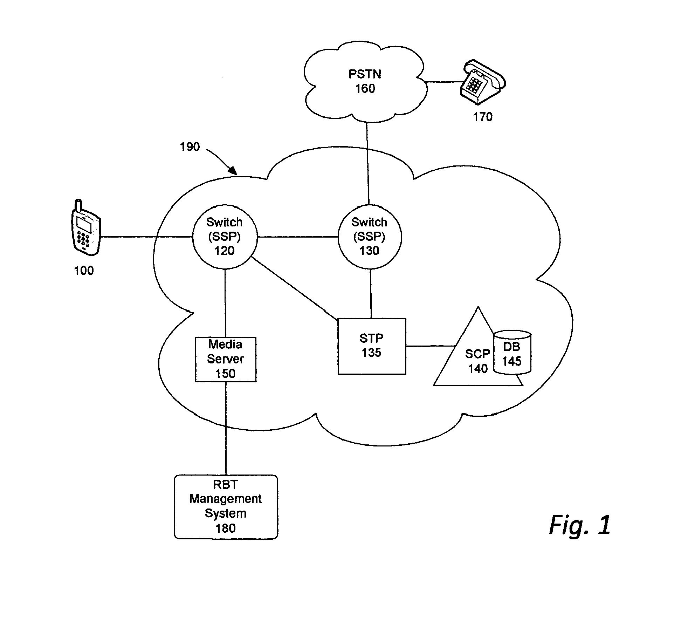

Referring to Figure 1, there is shown a functional block diagram of an intelligent switched telecommunication network (IN) 190 comprising a first Service Switch Point (SSP) 120, a second SSP 130, a Signal Transfer Point (STP) 135 and a Signalling Control Point (SCP) 140 with an associated database 145. The role of each of the SSPs 120, 130, STP 135, and SCP 140 in the context of intelligent telecommunications networks will be understood and further explanation is not considered necessary. The first SSP 120 is here associated with first user equipment 100 and the second SSP 170 with a PSTN 160 to which second user equipment 170 is connected. It will however be appreciated that in practise additional SSPs may be present in the IN 190.

Also provided within the IN 190 is a media server 150, although this can be external. A RBT management system 180 is connected to the media server 150.

The terms switch and SSP are used interchangeably.

Each SSP 120, 130 is configured, in addition to its conventional IN operation, to recognise the presence of auxiliary digits annexed / subsequent to the dialled directory number identifying a party to be called. This may be means of initially recognising the dialled directory number, e.g. by the length of the string of digits, and therefore recognising that the remaining digits are not part of the directory number. Alternatively, this may be means of identifying a special symbol such as the * or # symbol, separating the directory number and suffix.

If no suffix is identified or the suffix does not conform to a predetermined length or pattern of digits, then the SSP 120, 130 initiates normal call processing with the calling party (that which initiated communication with the SSP) receiving a standard RBT, e.g. the ITU RBT.

If a suffix conforming to the predetermined format is recognised, the SSP 120, 130 is configured to send the directory number, the suffix and optionally the number of the calling party to the STP 135 which sends this information to the SCP 140. The SCP 140 is configured to perform a database query at its associated database 145 to determine the treatment for the call. If the suffix matches predefined RBT suffixes held in the database 145, the SCP 140 instructs the SSP 120 which sent the call message to connect to the media server 150.

To illustrate the process, we assume that a calling party, associated with user equipment 100, initiates a call to a called party by dialling the telephone number associated with user equipment 170, together with a RBT suffix. The call is made via local SSPs 120, 130 and PSTN 160, although more or fewer network elements can be involved. The RTB suffix code may be one or more digits depending on the available digits. We assume that the suffix code is separated from the dialled number with a non-digit symbol such as "*".

When the first SSP 120 is receiving the digits from the calling party user equipment 100 it analyses the digits as is known in the art. The suffix code is recognized by SSP 120 when entered, and the SSP sends the directory number dialled, the suffix code, and the number of the calling party to STP 135. STP 135 sends the message to the SCP 140. A database query is made in database 145 to determine the treatment for the call. If suffix matches predefined RBT suffixes in database 145, SCP 140 instructs SSP 120 to connect to the media server 150. In response, SSP (120) connects to the media server 150.

The media server 150 is configured to determine the RBT corresponding to the RBT suffix by comparing the suffix received from the SSP 150 with a database storing data corresponding suffixes to RBTs (audio and/or video clips). For each suffix, multiple RBTs can be stored and the determination can be made based on one or more of the calling party number and called party number. The media server 150 is also configured to play the selected RBT to the calling party user equipment 170 via SSP 120.

Two methods can be used in order to handle the above-described RBT process based on the instructions from the SCP 140.

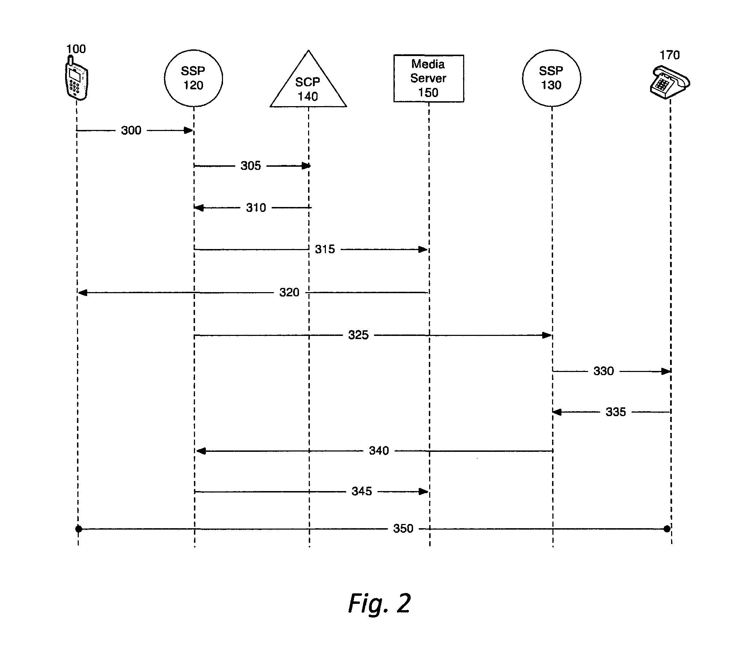

In a first case, the SSP 120 is instructed to send a first call leg and a second call leg in parallel, wherein the first call leg connects the calling party user equipment 100 to the media server 150, and wherein the second call leg connects the calling party user equipment 100 to the called party equipment 170. Upon a connection of the second call leg, the first call leg is released. The specific steps will now be described with reference to Figure 2.

Referring to Figure 2, in a first step 300, calling user equipment 100 sends the dialled directory number and RBT suffix to its local SSP 120. In a second step 305, the SSP 120 recognises the presence of the RBT suffix and transmits the directory number, RBT suffix and caller party number to the SCP 140. In a third step 310, the SCP 140 having identified the RBT suffix as such, sends information back to the SSP 120 causing the SSP to connect to the media server 150. This connection is made in step 315. The media server 150 at this stage determines the corresponding RBT to the RBT suffix and plays it via SSP 120 to the caller user equipment 100 (step 320). In parallel with this, the SSP 120, having received the routing information from the SCP 140 establishes a connection with the called party's local SSP 130 which connects to the called party's user equipment 170. This connection is made in steps 325 and 330. If the called party answers the call at their user equipment 170, in steps 335 and 340 a connect message is transmitted via SSP 130 to SSP 120. The SSP 120 then signals to the media server 150 to drop the first call leg in step 345. In step 350, the voice channel between the calling and called user equipment 100, 170 is established.

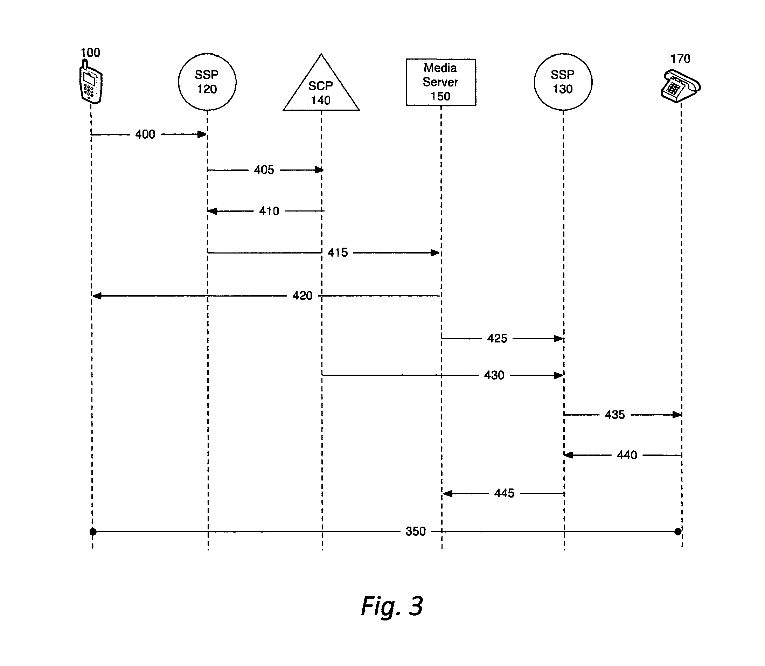

In a second case, the SSP 120 is instructed to send a call to the media server 150 which originates a call to the called party user equipment 170 through one or more switches 120, 130. Once an answer from the called party user equipment 170 is received by the media server 150, the media server instructs a two-bearer channel call transfer (2BCT) to connect the calling party user equipment 100 with called party user equipment 170 and then drop out of the call. In an alternative case, if such bridging is not performed, the media server 150 stays in the call path for the duration of the call. The specific steps will now be described with reference to Figure 3.

Referring to Figure 3, in a first step 400, calling user equipment 100 sends the dialled directory number and RBT suffix to its local SSP 120. In a second step 405, the SSP 120 recognises the presence of the RBT suffix and transmits the directory number, RBT suffix and caller party number to the SCP 140. In a third step 410, the SCP 140 having identified the RBT suffix as such, sends information back to the SSP 120 causing the SSP to connect to the media server 150. This connection is made in step 415. The media server 150 at this stage determines the corresponding RBT to the RBT suffix and plays it via SSP 120 to the caller user equipment 100 (step 420). In parallel with this, the media server 150, having received the routing information from the SCP 140 establishes a connection with the called party's local SSP 130 which connects to the called party's user equipment 170. This connection is made in steps 425, 430 and 435. If the called party answers the call at their user equipment 170, in steps 440 and 445 a connect message is transmitted via SSP 130 to the media server 150 causing it to establish the 2BCT to connect the calling party user equipment 100 with the called party user equipment 170 (step 350) and to drop the RBT playback.

The exact deployment may vary slightly in different networks, but the resulting service will remain very similar.

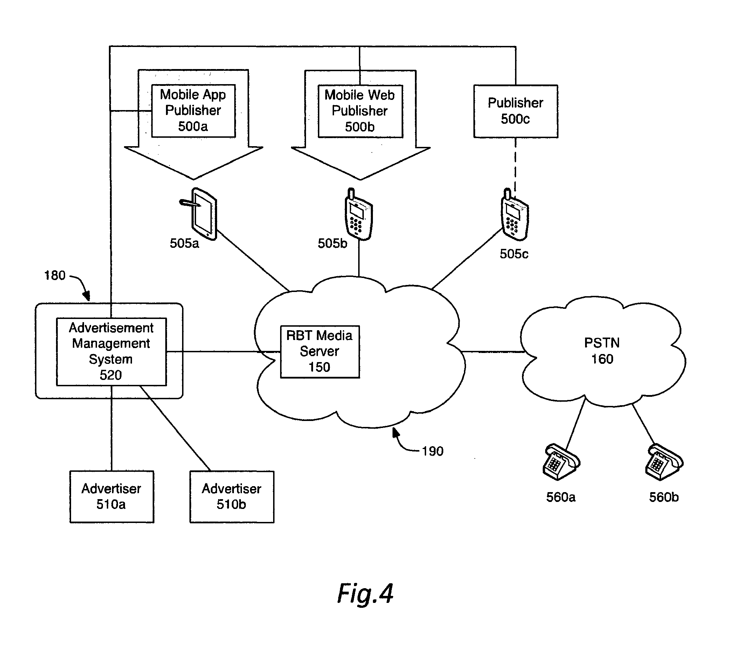

A further embodiment will now be described with reference to Figure 4, which embodiment provides a system and method for providing a RBT advertisement service configured to play RBT advertisement clips to calling parties on demand. This system and method employs the above-described embodiment in which advertisement RBTs are played only when a predefined suffix is appended to the dialled number.

Appended suffixes identify publishers uniquely. The directory number with suffix can be provided in any form of digital material, printed material or broadcast material.

Referring to Figure 4, there is shown a functional block diagram of a system including the intelligent switched telecommunication network (IN) 190 of Figure 1, including the RBT media server 150. The IN 190 can be any intelligent telecommunication network, such as mobile cellular network, public switched telephone network (PSTN), or voice over IP (VoIP) network. In this case, IN 190 is a mobile network connected to a PSTN 160.

The IN 190 is accessible in the conventional manner by consumer user equipment including, but not limited to computer terminals, PDAs, tablet computers, mobile telephones, landline terminals and so on. Here, a PDA 505a, and mobile telephones 505b, 505c are shown with connections to the IN 190, but landline terminals 560a, 560b can also connect via the PSTN 160.

An advertisement management system (AMS) 520 is connected or connectable to the RBT media server 150 of the IN 190. The AMS 180 is a centralised system configured to manage a service for use by publishers 500a-c and advertisers 510a-b over a data network (e.g. the Internet) in order to deliver RBT advertisements to consumers associated in this case with user equipments 505a-c. In the example, there is shown a mobile application publisher 500a, a mobile web publisher 500b and a print publisher 500c.

Further, the AMS 520 manages what is stored on the RBT media server 150, which may be specified by advertisers uploading content as and when, as well as being configured to collect information about RBT usage and billing. The AMS 520 stores amongst other information user profiles and other information for targeting advertisements. AMS 520 can be implemented independently or as a part of broader ringback tone management system 180 as shown in the exemplary setup.

Publishers 500a-c and advertisers 510a-b can be any entity, whether an individual or company registered with the AMS 520. Consumers, associated with user equipment 505a-c are individuals who have listened or watched the RBT advertisements, where a video or audio advertisement. An advertisement is considered to be consumed (listened or watched) only if it is played for at least some threshold of time, "T" seconds and, optionally, if the call was not rejected with a busy tone.

In use, advertisers 510a-b submit audio or video advertisement content to the advertisement management system 520. Advertisers 510a-b can also create campaigns to group advertisement content. Additionally, advertisers 510a-b can target campaigns by publisher or consumer profile.

The publishers 500a-c are uniquely identified to the AMS 520 by a suffix or group of suffixes, which is/are allocated upon registration with the AMS 520. Publishers 500a-c may be a directory service, catalogue, or any other type of publication that contains telephone numbers in print or electronic format.

Having been allocated a suffix, a publisher publishes their suffix against one or more telephone numbers provided on their media. For example, the mobile web publisher 500b may provide a directory service accessible to consumers on a web page; the publisher's suffix can be appended to one or more of their published directory numbers.

To give a more detailed example, the mobile application publisher 500a registers with AMS 520 and acquires a unique suffix, which it then appends to all directory numbers published in or by its mobile application. In this example, the mobile application is a directory or electronic map containing businesses information.

In use, a consumer, via their user equipment 505a, selects a directory item and using "click-to-dial" functionality on the mobile application requests a call. The mobile application initiates a call to the directory number (e.g. associated with user equipment 560a) together with the suffix allocated for this publisher 500a. When the call reaches the IN 190, the IN recognizes the suffix using the method described with reference to Figures 1 to 3, and plays a RBT from the media server 150 to the calling party user equipment 505a while waiting for the call to be connected. The media server 150 can select and play RBT content based on targeting information provided by AMS 520. This content and targeting information stored on the AMS 520 is provided by advertisers 510a-b.

After the call is complete, the media server 150 passes back to the AMS 520 information about the call, such as data indicating one or more of the calling party number, the caller party number, the dialled suffix, the call start time, the call duration, and the call termination reason. Based on this usage information, the AMS 520 can be configured to perform a financial transaction, such as crediting the relevant publisher 500a-c, and charging the relevant advertiser 510a-b. This system and method provides a form of advertising to allow the publisher to benefit from selling the generated advertising space to advertisers.

Further, by combining this service with a DTMF feedback loop, the calling party 505a-c can receive further information on the advertising played to them during call set up by pressing any key on the keypad of their user equipment 500a-c. For instance, a car manufacturer may employ the advertising to promote its latest model to a calling party 505a-c. The calling party 505a-c can then press "1" "*" or any combination of DTMF keys to request further information from the relevant advertiser 510a-b such as receiving a link via SMS or requesting to be called by the local dealer to book a test drive.

In relation to mobile and internet telephone systems, within business and other contact directories the suffix can be hidden and only be activated through 'click to call' where the suffix is added to the dialer program within the Operating System of a Mobile Phone or Web -based VOIP application.

It will be appreciated that the above described embodiments are purely illustrative and are not limiting on the scope of the invention. Other variations and modifications will be apparent to persons skilled in the art upon reading the present application.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

## Claims

1. A system for providing a Ring Back Tone (RBT) service, comprising:
means for receiving a call request from a calling party which call request includes a string of digits;
means for identifying from said string a first part comprising digits for identifying a called party to a telephone network and a second part suffixed or subsequent to the first part comprising one or more auxiliary digits; and
means responsive to identifying the presence of the auxiliary digits to access or cause access to a RBT database which corresponds said auxiliary digits to a RBT for transmission to the caller.

2. A system according to claim 1, wherein the identifying means is configured to identify the first and second parts by means of identifying a separation digit or symbol between the two parts in the call request.

3. A system according to claim 2, wherein the identifying means is configured to identify a separation symbol which is either the "*" or "#" symbol.

4. A system according to any preceding claim, wherein the identifying means comprises a telephone network switch.

5. A system according to claim 4, wherein the telephone network switch is a SSP of the network.

6. A system according to claim 4 or claim 5, wherein the means responsive to identifying the presence of auxiliary digits comprises a network service control point configured to receive at least the auxiliary digits from the telephone network switch, to identify whether the auxiliary digits correspond to a RBT service by means of comparing said digits with a stored list and, in such case, to access or cause access to the RBT database by means of the or a different network switch.

7. A system according to any preceding claim, further comprising RBT transmission means associated with the RBT database for receiving the first part of the call request identifying the calling party and to transmit the corresponding RBT to the calling party.

8. A system according to claim 7, further comprising a network switch configured to set up a first call with the RBT transmission means to enable transmission of the corresponding RBT to the calling party via said switch, and in parallel to set up a second call to the identified called party and to subsequently drop the connection with the RBT transmission means in the event that the called party answers the call.

9. A system according to claim 7, further comprising a network switch configured to set up a first call with the RBT transmission means to cause transmission of the corresponding RBT to the calling party, and to transmit the identity of the called party to the RBT transmission means, the RBT transmission means being further configured to set up a second call between it and the identified called party and in the event that the called party answers the call, to stop transmission of the RBT and establish a bridged connection between the called party and the calling party.

10. A system for providing a Ring Back Tone (RBT) service, comprising, in an intelligent switched telecommunications network:
- a first node configured to receive from user equipment a call request string of digits and to recognise therein one or more auxiliary digits suffixed to a telephone number;
- a second node configured to receive the auxiliary digits from the first node, to identify therefrom a RBT service, and to instruct the first node to connect to a RBT node associated with the RBT service; and
- a RBT node configured to receive a connection from the first node, including the auxiliary digits, and responsive thereto to play a RBT corresponding to the auxiliary digits to the user equipment.

11. A RBT transmission means or node configured for use with the system of claim 7 or claim 10.

12. A RBT management system for use with a system according to any preceding claim, comprising:
means for assigning to a user a string of auxiliary digits;
means for receiving RBT content from the user; and
means for transferring the RBT content to the RBT transmission means or node for being stored in correspondence with the auxiliary digits assigned to the user.

13. A RBT management system according to claim 12, further comprising means for receiving from the RBT transmission means or node, for each instance of a RBT being played to a caller, one or more of the caller identity, called party identity, auxiliary digits, the call start time, the call duration, and the call termination reason.

14. A method for providing a Ring Back Tone (RBT) service, comprising:
receiving a call request from a calling party which call request includes a string of digits;
identifying from said string a first part comprising digits for identifying a called party to a telephone network and a second part suffixed or subsequent to the first part comprising one or more auxiliary digits; and
responsive to identifying the presence of the auxiliary digits to access or cause access to a RBT database which corresponds said auxiliary digits to a RBT for transmission to the caller.

15. A method according to claim 14, wherein the identifying step identifies the first and second parts by means of identifying a separation digit or symbol between the two parts in the call request.

16. A method according to claim 15, wherein the identifying step identifies a separation symbol which is either the "*" or "#" symbol.

17. A method according to any one of claims 14 to 16, wherein the identifying step is performed at a telephone network switch.

18. A method according to claim 17, wherein the telephone network switch is a SSP of the network.

19. A method according to claim 17 or claim 18, wherein the step responsive to identifying the presence of auxiliary digits is performed at a network service control point which receives at least the auxiliary digits from the telephone network switch, identifies whether the auxiliary digits correspond to a RBT service by means of comparing said digits with a stored list and, in such case, accesses or causes access to the RBT database by means of the or a different network switch.

20. A method according to any of claims 14 to 19, further comprising receiving the first part of the call request identifying the calling party and transmitting the corresponding RBT to the calling party.

21. A method according to claim 20, further comprising setting up a first call with the RBT transmission means to enable transmission of the corresponding RBT to the calling party via said switch, and in parallel setting up a second call to the identified called party and subsequently dropping the connection with the RBT transmission means in the event that the called party answers the call.

22. A method according to claim 20, further comprising setting up a first call with the RBT transmission means to cause transmission of the corresponding RBT to the calling party, transmitting the identity of the called party to the RBT transmission means, causing the RBT transmission means to up a second call between it and the identified called party, wherein in the event that the called party answers the call, transmission of the RBT is stopped and a bridged connection is established between the called party and the calling party.

23. A method for providing a Ring Back Tone (RBT) service, comprising, in an intelligent switched telecommunications network:
- at a first node, receiving from user equipment a call request string of digits and recognising therein one or more auxiliary digits suffixed to a telephone number;
- at a second node, receiving the auxiliary digits from the first node, identifying therefrom a RBT service, and instructing the first node to connect to a RBT node associated with the RBT service; and
- at a RBT node, receiving a connection from the first node, including the auxiliary digits, and responsive thereto playing a RBT corresponding to the auxiliary digits to the user equipment.

24. A method of providing RBT management for use with a system according to any of claims 1 to 11, comprising:
assigning to a user a string of auxiliary digits;
receiving RBT content from the user; and
transferring the RBT content to the RBT transmission means or node for being stored in correspondence with the auxiliary digits assigned to the user.

25. A method according to claim 24, further comprising receiving from the RBT transmission means or node, for each instance of a RBT being played to a caller, one or more of the caller identity, called party identity, auxiliary digits, the call start time, the call duration, and the call termination reason.

26. A computer program comprising instructions that when executed by computer apparatus control it to perform the method as claimed in any one of claims 14 to 25.

27. A non-transitory computer-readable storage medium having stored thereon computer-readable code, which, when executed by computing apparatus, causes the computing apparatus to perform a method comprising:
receiving a call request from a calling party which call request includes a string of digits;
identifying from said string a first part comprising digits for identifying a called party to a telephone network and a second part suffixed or subsequent to the first part comprising one or more auxiliary digits; and
responsive to identifying the presence of the auxiliary digits to access or cause access to a RBT database which corresponds said auxiliary digits to a RBT for transmission to the caller.
